# EUROPÄISCHE PATENTSCHRIFT

(11) **EP 0 376 035 B1**
(45) Veröffentlichungstag und Bekanntmachung des Hinweises auf die Patenterteilung: **31.08.1994**
(21) Anmeldenummer: 89122803.3
(22) Anmeldetag: 11.12.1989
(51) Int. Cl.: G11B 15/68, G11B 23/023, G11B 23/02, G11B 33/02

(54) **Drehspeicher**
Multiple carousel storage
Fichier à manèges multiples

(30) Priorität: 30.12.1988 DE 3844303; 23.09.1989 DE 3931789
(43) Veröffentlichungstag der Anmeldung: 04.07.1990
(73) Patentinhaber: GRAU GMBH & CO., D-73527 Schwäbisch Gmünd (DE)
(72) Erfinder: Baur, Rolf, verstorben (DE); Linser, JÖrg, D-7072 Heubach-Lautern (DE); Grau, Herbert, D-7070 Schwäbisch Gmünd (DE); Bareis, Manfred, D-7070 Schwäbisch Gmünd 10 (DE)
(74) Vertreter: Hoeger, Stellrecht & Partner

(56) Entgegenhaltungen:
- EP-A- 0 261 410
- DE-A- 2 712 299
- DE-A- 3 621 790
- FR-A- 1 183 495
- PATENT ABSTRACTS OF JAPAN Band 10, Nr. 361
- 523)(2418), 4. Dezember 1986;&& JP - A - 61158063 (CANON INC) 17.07.1986
- PATENT ABSTRACTS OF JAPAN Band 11, Nr. 210 (M-604)(2657), 8. Juli 1987; & JP - A - 6227207 (CANON INC) 05.02.1987
- PATENT ABSTRACTS OF JAPAN Band 11, Nr. 210 (M-604)(2657), 8. Juli 1987; & JP - A - 6227206 (CANON INC) 05.02.1987

## Beschreibung

Die Erfindung betrifft einen Drehspeicher für Bandkassetten mit einem Bodengestell und einem auf diesem um eine Drehachse drehbaren Drehgestell, welches Regalzellen mit Kassettenfächern für Bandkassetten trägt.

Zur Speicherung von Bandkassetten von Großrechneranlagen werden Speicherregale verwendet. Diese Speicherregale sind entsprechend ihrer Bestimmung mit Kassettenfächern versehen, so daß eine Ablage der Bandkassetten in einer definierten Position möglich ist. Vorzugsweise sind derartige Regale unmittelbar in der Nähe von Bandeinheiten zum Lesen und Beschreiben der Bandkassetten angeordnet.

Aus dem JP 61-11963A ist ein Speicher für Bandkassetten bekannt, welcher eine Vielzahl von Regalzellen mit Kassettenfächern aufweist, welche um eine Achse drehbar sind.

Nachteilig ist bei diesen Regalen, daß die Kassettenfächer nur im Bereich des Außenumfangs des Regals angeordnet sind, so daß eine Steigerung der Zahl der Kassetten pro Drehspeicher eine Vergrößerung des Umfangs zur Folge hat.

Ein Drehspeicher nach dem Oberbegriff des Anspruchs 1 ist aus JP 61-158063 bekannt. Durch das Versehen von Unterdrehgestellen wird die Anzahl der Regalzellen erhöht.

Auch bei optimaler Anordnung der Untergestelle am Trägergestell verbleiben zwischen den Untergestellen Zwischenzonen.

Der Erfindung liegt daher die Aufgabe zugrunde, einen Drehspeicher der gattungsgemäßen Art derart zu verbessern, daß die Zahl der Kassettenfächer weiter vergrößert wird, wobei der Raumbedarf möglichst klein gehalten werden soll.

Diese Aufgabe wird bei einem Drehspeicher der eingangs beschriebenen Art erfindungsgemäß dadurch gelöst, daß nahe am Außenumfang des Trägergestells in den sich zwischen den Untergestellen bildenden Zwischenzonen weitere Regalzellen stationär angeordnet sind.

Durch diese vorteilhafte Ausbildung des Drehgestells mit den Untergestellen wird neben dem Innenraum auch die Peripherie der Drehspeicher optimal ausgenützt und dadurch bei geringem Raumbedarf eine größere Speicherkapazität geschaffen.

Besonders vorteilhaft ist es dabei, wenn die Drehachse vom Bodengestell senkrecht nach oben verläuft.

Dabei sieht eine besonders günstige Anordnung vor, daß die Drehachse und die Untergestelldrehachsen parallel zueinander verlaufen.

Vorteilhafterweise ist vorgesehen, daß die Untergestelldrehachsen im wesentlichen senkrecht angeordnet sind.

Um eine optimale Anordnung der Untergestelle zu erreichen, ist zweckmäßigerweise vorgesehen, daß die Untergestelldrehachsen im gleichen Abstand von der Drehachse des Trägergestells angeordnet sind.

Weiterhin läßt sich eine günstige Anordnung der Untergestelle dadurch erreichen, daß die Untergestelldrehachsen im gleichen Winkelabstand um die Trägergestellachsen angeordnet sind.

Die Regalzellen haben vorzugsweise eine eine Ebene bildende Frontfläche. Besonders günstige Ausbildungen haben einen rechteckigen Querschnitt und vorzugsweise eine quaderähnliche Form. Außerdem ist es vorteilhaft, wenn die Regalzellen mehrere waagerecht verlaufende Reihen von Kassettenfächern aufweisen, die übereinander gestapelt sind. Besonders günstig ist es dabei, wenn die Kassettenfächer zur Aufnahme hochkant stehender Bandkassetten ausgebildet sind.

Eine zweckmäßige Ausführungsform sieht vor,daß die Untergestelle eine zylindrische, runde Außenumfangsfläche aufweisen.

Alternativ dazu ist es vorteilhaft, wenn die Untergestelle eine im Querschnitt dreikantige, d.h. mit drei Flächen versehene Außenumfangsfläche aufweisen.

Es ist aber auch denkbar, daß die Untergestelle eine vierkantige, d.h. mit vier Flächen versehene Außenumfangsfläche aufweisen.

Schließlich ist es denkbar, daß die Untergestelle eine Vielkantige Außenumfangsfläche aufweisen.

Die Regalzellen sind bei einem bevorzugten Ausführungsbeispiel identisch ausgebildete modulähnliche Einheiten, die an die Untergestelle montierbar sind.

Um jeweils einen Zugriff zu den unterschiedlichen Regalzellen in einfacher Weise zu ermöglichen, ist bei einer bevorzugten Ausführungsform zweckmäßigerweise vorgesehen, daß die zu einer Außenseite des Drehspeichers hin gewandten Frontseiten der Regalzellen einen im wesentlichen konstanten Abstand von der Drehachse des Trägergestells aufweisen. Das heißt, daß die Frontseiten der Regalzellen der Untergestelle und die Frontseiten der Regalzellen, die direkt am Trägergestell gehalten sind, im wesentlichen denselben radialen Abstand von der Drehachse des Trägergestells aufweisen, so daß unabhängig davon, ob nun eine Regalzelle eines Untergestells oder eine vom Trägergestell getragenen Regalzelle in einer für einen Zugriff geeigneten Position stehen, diese für einen von außen zugreifenden Roboter in derselben geometrischen Position angeordnet sind.

Um einen Zugriff zu den einzelnen Regalzellen in einfacher Weise möglich zu machen, ist ein Trägergestellantrieb vorzusehen.

Vorzugsweise ist der Trägergestellantrieb so ausgebildet, daß er einen Trägergestellantriebsmotor umfaßt, welcher relativ zum Bodengestell nichtdrehend angeordnet ist. Dies hat den großen Vorteil, daß eine Stromzuführung zu dem Trägergestellantriebsmotor im nichtdrehenden System durch stationäre Leitungen erfolgen kann, was insbesondere in den Fällen, in denen die Trägergestellantriebsmotoren Schrittmotoren sind, sehr zweckmäßig ist, da Drehzuführungen für Schrittmotoren stets zu fehlerbehafteten Impulszahlen Anlaß geben.

Am günstigsten ist es dabei, wenn ein Antrieb des Trägergestells über ein koaxial zur Drehachse des Trägergestells angeordnetes Verbindungsglied erfolgt, welches im einfachsten Fall ein Antriebselement des Trägergestells ist.

Darüberhinaus ist es weiterhin vorteilhaft, wenn ein Untergestellantrieb vorgesehen ist.

So wäre es bei einem Ausführungsbeispiel denkbar, jedem Untergestell einen eigenen Antrieb zuzuordnen. Dies hat jedoch den Nachteil, daß damit eine Vielzahl von selbständigen Antrieben notwendig ist.

Aus diesem Grund sieht eine kostengünstige Lösung vor, daß mehrere Untergestelle durch einen gemeinsamen Untergestellantrieb antreibbar sind.

Besonders vorteilhaft ist es, wenn alle Untergestelle durch einen gemeinsamen Untergestellantrieb antreibbar sind, so daß nur ein kostenaufwendiger Antrieb erforderlich ist, der alle Untergestelle gleichzeitig dreht. Dies bringt zusätzliche steuerungstechnische Vorteile mit sich, da somit auch nur ein Antrieb angesteuert werden muß.

Besonders zweckmäßig ist es dabei auch, wenn der Untergestellantrieb einen Untergestellantriebsmotor umfaßt, der relativ zum Bodengestell nichtdrehend gehalten ist, d.h., der ebenfalls mit stationären Zuleitungen versorgt werden kann, was bei Verwendung von Schrittmotoren eine große Fehlerquelle ausschaltet.

Besonders zweckmäßig ist es dabei, wenn der Untergestellantriebsmotor am Bodengestell angeordnet ist.

Die mechanische Verbindung des Untergestellantriebs mit den Untergestellen erfolgt in vorteilhafter Weise dadurch, daß der Untergestellantrieb ein koaxial zur Drehachse des Trägergestells angeordnetes Zwischenantriebsglied umfaßt, welches vorzugsweise eine Verbindung zwischen dem nichtdrehend angeordneten Untergestellantriebsmotor und den sich mit dem Trägergestell drehenden Untergestellen schafft, d.h. eine Übertragung von nichtdrehenden in das drehende System durchführt. Konstruktiv läßt sich dies zweckmäßig dadurch lösen, daß der Untergestellantrieb eine zur Drehachse des Trägergestells koaxial angeordnete Zentralwelle umfaßt, über welche dann ein Antrieb der einzelnen Untergestelle erfolgt.

Im zweckmäßigsten Fall erfolgt ein Antrieb der Zentralwelle durch den Untergestellantriebsmotor über einen Riemenantrieb.

Besonders zweckmäßig ist eine Lösung, bei welcher von der Zentralwelle ausgehend die Untergestelle angetrieben werden.

Günstigerweise erfolgt dies auch dadurch, daß jedes Untergestell eine zur Untergestellachse koaxiale Untergestellantriebswelle aufweist, welche von der Zentralwelle angetrieben ist.

Auch die Verbindung zwischen der Untergestellantriebswelle und der Zentralwelle erfolgt vorteilhafterweise so, daß die Zentralwelle jede Untergestellantriebswelle über einen Riementrieb antreibt.

Die Riementriebe sind vorzugsweise so angeordnet, daß jeder Riementrieb in einer zur Drehachse des Trägergestells senkrechten Ebene liegt.

Im Rahmen der vorliegenden Erfindung könnten die Riementriebe so angeordnet sein, daß sie auf der dem Bodengestell zugewandten Seite des Drehgestells liegen. Dies hätte aus antriebstechnischen Gesichtspunkten den Vorteil der Nähe zum Bodengestell.

Besonders zweckmäßig ist es jedoch, wenn die Riementriebe zwischen der Zentralwelle und der Untergestellantriebswelle auf der dem Bodengestell gegenüberliegenden Seite des Trägergestells angeordnet sind.

Besonders vorteilhaft ist es, wenn das Trägergestell eine Hohlwelle aufweist, welche von der Zentralwelle durchsetzt ist.

Die Lagerung des Trägergestells erfolgt günstigerweise dadurch, daß die Hohlwelle drehbar am Bodengestell gelagert ist.

Besonders vorteilhaft ist es dabei, wenn das Bodengestell ein selbsttagendes Gehäuse umfaßt, auf welchem dann das Trägergestell aufsitzt.

Eine konstruktiv einfache Möglichkeit zum Antrieben des Trägergestells sieht vor, daß die Hohlwelle über einen vom Trägergestellantrieb umfaßten Riementrieb getrieben ist.

Ein hinsichtlich des Antriebs des Trägergestells und der Untergestelle kompakt bauende Lösung sieht vor, daß der Riementrieb zum Antrieb der Hohlwelle und der Riementrieb zum Antrieb der Zentralwelle in dem Bodengestell angeordnet sind.

Vorzugsweise ist vorgesehen, daß einer der vorstehend genannten Riementriebe oder sämtliche der vorstehend genannten Riementriebe mit Zahnriemen arbeiten.

Zur genauen Positionierung des Trägergestells und der Untergestelle ist zweckmäßigerweise eine Steuerung vorgesehen, welche die Drehstellungen des Trägergestells und der Untergestelle erfaßt.

Vorzugsweise sind hierzu an den einzelnen Antriebszügen Sensoren vorgesehen, die im günstigsten Fall am Trägergestellantriebsmotor und am Untergestellantriebsmotor sitzen.

Zweckmäßigerweise ist die Steuerung so aufgebaut, daß sie aus den Drehstellungen des Trägergestellantriebs und des Untergestellantriebs die Position der einzelnen, von den Untergestellen getragenen Regalzellen relativ zu einem außenliegenden Fixpunkt ermittelt.

Ergänzend zur Erfassung der Drehstellungen des Trägergestells und der Untergestelle sieht ein besonders bevorzugtes Ausführungsbeispiel vor, daß die Steuerung aufgrund der Drehstellungen des Trägergestells und der Untergestelle eine Drehung des Trägergestells und gegebenenfalls des Untergestells steuert, um ein ausgewähltes Kassettenfach in einer Zugriffstellung für einen Roboter zu positionieren.

Besonders vorteilhaft hat sich eine Ausführung der Steuerung erwiesen, bei welcher während der Drehung des Trägergestells eine Drehung der Untergestelle erfolgt, so daß nach Beendigung der Drehung des Trägergestells im wesentlichen auch die Drehung der Untergestelle beendet ist.

Unter Heranziehung der Steuerung ist bei einem besonders bevorzugten Ausführungsbeispiel vorgesehen, daß mit dieser Steuerung eine Grobpositionierung des Trägergestells und des Untergestells erfolgt.

Ergänzend zu einer Grobpositionierung oder auch ohne Grobpositionierung ist bei einem Ausführungsbeispiel, bei welchem es besonders auf die genaue Positionierung der Kassettenfächer in der Zugriffstellung ankommt, eine Genaupositioniereinrichtung vorgesehen, mit welcher eine exakte Positionierung des Trägergestells in vorgegebenen Winkelstellungen relativ zum Bodengestell erfolgt und welche am Trägergestell und am Bodengestell angeordnete erste Positionierelemente aufweist.

In gleicher Weise ist es besonders vorteilhaft, wenn eine Genaupositioniereinrichtung vorgesehen ist, mit welcher eine exakte Positionierung eines Untergestells in vorgegebenen Winkelstellungen relativ zum Bodengestell erfolgt, und welche am Untergestell und am Bodengestell angeordnete zweite Positionierelemente aufweist. Der besondere Vorteil dieser Positionierung des Untergestells, ist der, daß diese nicht relativ zum Trägergestell, sondern zum Bodengestell erfolgt, so daß letztendlich bei einer ebenfalls vorhandenen Genaupositionierung des Trägergestells sowohl dieses als auch das Untergestell relativ zum Bodengestell exakt positioniert ist.

Hinsichtlich der Ausbildung der Positionierelemente wurden bislang keine näheren Angaben gemacht. So ist eine einfache konstruktive Lösung bevorzugt, bei welcher die Positionierelemente einen in eine Ausnehmung eingreifenden Riegel aufweisen.

Um, beispielsweise bei vorausgehender Grobpositionierung, eine exakte Genaupositionierung durchführen zu können, ist es zweckmäßig, wenn der Riegel oder die Ausnehmung oder beide mit Einfahrschrägen versehen sind, so daß die Einfahrschrägen dann so ausgebildet sind, daß sie in der grobpositionierten Zugriffstellung miteinander zur Anlage kommen können und eine Relativverschiebung des Trägergestells oder des Untergestells relativ zum Bodengestell bewirken, solange bis diese die exakte Position erreicht haben.

Vorzugsweise wird die exakte Position des Trägergestells und des Untergestells relativ zum Bodengestell dadurch erreicht, daß der Riegel mit der Ausnehmung eine Passung bildet.

Die Untergestelle sind senkrecht und zentrisch zur Mittelachse des Trägergestells angeordnet, so daß im Hinblick auf die wirkenden Drücke das Trägergestell in jedem Punkt ungefähr gleich hoch belastet wird.

Dabei können abhängig von den Radien des Trägergestells und der Untergestelle auf einem Trägergestell zwischen zwei bis sieben Untergestelle angeordnet werden. Vorzugweise ist jedoch vorgesehen, vier Untergestelle auf einem Trägergestell anzuordnen.

Aus dieser vorgeschlagenen Lösung ergibt sich der Vorteil, daß gegenüber einem Drehgestell ohne Untergestelle in einem Drehgestell mit vier Untergestellen, bei jeweils gleicher Höhe etwa die doppelte Anzahl von Bandkassetten untergebracht werden können, als wenn im Drehgestell keine Untergestelle untergebracht sind.

Die Ausgestaltung der Untergestelle hinsichtlich des Aussenumfangs kann von zylindrisch rund über dreikantig, vierkantig bis vielkantig variieren. Welche Ausführung gewählt wird, hängt nicht zuletzt von der Abmessung der Regalzellen ab, die im Untergestell angeordnet werden. Dabei können die Regalzellen sowohl aus Metall als auch aus Kunststoff hergestellt sein. Die Regalzellen sind in den Untergestellen befestigt. Alle Regalzellen in einem Drehgestell haben die gleichen Abmessungen und können, falls nötig, leicht ausgewechselt werden, z.B. nach einem Crash.

Bei einer bevorzugten Ausführungsform ist es möglich, zunächst durch Drehen des Drehgestells das betreffende Untergestell in die gewünschte Bedienungsposition zu bringen und anschließend oder gleichzeitig das Untergestell mit dem weiteren Antrieb in die Stellung zu drehen, daß die geforderte Kassette greifbar in einer definierten Position für den Roboter oder den Operator angeordnet ist.

Im Falle eines Ausfalls der Antriebseinrichtung - die elektromotorisch sein kann - können sowohl das Drehgestell als auch die Untergestelle von Hand bewegt werden. Durch eine geordnete Lagerung der Bandkassetten ist es jederzeit möglich, den Drehspeicher einfach von Hand zu bedienen.

Die Untergestelle, drehbar auf dem Drehgestell angeordnet, verursachen im peripheren Bereich des Drehgestells Zwischenzonen mit flächenmäßig annähernd dreieckförmigem Grundriss.

In diesen Freiräumen - Zwischenzonen - sind weitere Regalzeilen angeordnet, so daß der gesamte Raum in einem Drehgestell optimal zur Unterbringung von Bandkassetten genützt wird.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: einen Drehspeicher in Seitenansicht;
- Fig. 2: einen erfindungsgemäßen Drehspeicher ähnlich Fig. 1 in Draufsicht mit zusätzlich auf dem Trägergestell angeordneten Regalzellen;
- Fig. 3: ein weiteres Ausführungsbeispiel eines erfindungsgemäßen Drehspeichers in Draufsicht mit vier dreikantigen Untergestellen und weiteren Regalzellen in Zwischenzonen;
- Fig. 4: ein weiteres Ausführungsbeispiel eines erfindungsgemäßen Drehspeichers in Draufsicht mit vier vierkantigen Untergestellen und weiteren Regalzellen in Zwischenzonen;
- Fig. 5: einen Schnitt durch eine Drehachse des Trägergestells bei einem weiteren Ausführungsbeispiel, dem ähnlich in Fig. 3 und
- Fig. 6: eine Draufsicht auf das Ausführungsbeispiel in Fig. 5 in Richtung des Pfeils A in Fig. 5.

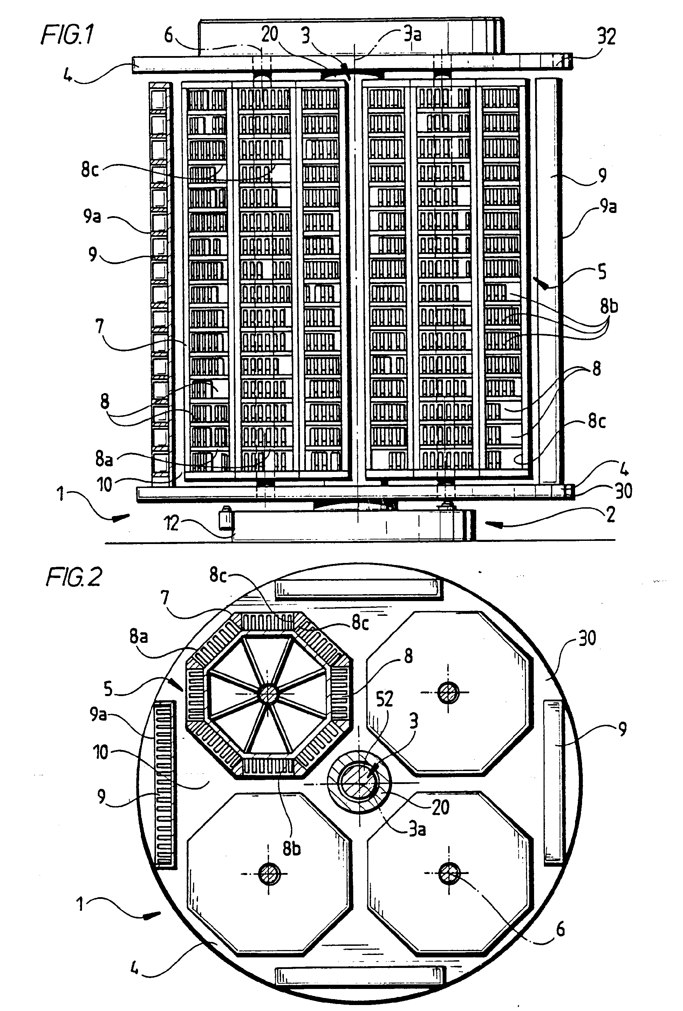

Ein erstes Ausführungsbeispiel eines Drehturmspeichers für Bandkassetten, dargestellt in Fig. 1, umfaßt ein als Ganzes mit 2 bezeichnetes Bodengestell, auf welchem ein als Ganzes mit 1 bezeichnetes Drehgestell angeordnet ist, welches gegenüber dem Bodengestell 2 drehbar ist.

Vorzugsweise ist hierfür eine sich vom Bodengestell 2 senkrecht nach oben erstreckende Welle 3 vorgesehen, an welcher das Drehgestell 1 drehbar gelagert ist.

Das Drehgestell 1 umfaßt ein Trägergestell 4, welches drehbar an der Welle 3 gelagert ist, so daß eine Trägergestellachse 3a gleich der Drehachse der Welle 3 ist.

An dem Trägergestell 4 sind mehrere Untergestelle 5 jeweils um eine Untergestellachse 6 drehbar gelagert, welche im Abstand von der Trägergestellachse 3a angeordnet ist.

Bei dem in Fig. 1 dargestellten, bevorzugten Ausführungsbeispiel sind die Trägergestellachse 3a und die Untergestelldrehachse 6 parallel zueinander ausgerichtet und verlaufen im wesentlichen in senkrechter Richtung.

Die Untergestelle 5 erstrecken sich im wesentlichen über die gesamte Höhe des Trägergestells 4 längs der Welle 3 und umfassen eine Vielzahl von Regalzellen 8, wobei in dem in Fig. 1 und 2 dargestellten Ausführungsbeispiel pro Untergestell 5 acht Regalzellen 8 vorgesehen sind. Jede der Regalzellen 8 erstreckt sich über die gesamte Höhe des jeweiligen Untergestells 5 längs der jeweiligen Untergestelldrehachse 6 und umfaßt eine Vielzahl übereinander angeordneter Reihen 8b von Kassettenfächern 8c, in welche die Bandkassetten vorzugsweise hochkant einführbar sind.

Wie insbesondere aus Fig. 2 zu ersehen ist, sind die Untergestelle 5 derart um die Welle 3 angeordnet, daß deren Untergestelldrehachsen 6 denselben radialen Abstand von der Trägergestellachse 3a aufweisen und daß auch untereinander die Abstände zwischen aufeinanderfolgenden Untergestelldrehachsen 6 gleich sind.

Das in Fig. 2 dargestellte Ausführungsbeispiel ist hinsichtlich der Anordnung der Untergestelle mit dem in Fig. 1 dargestellten Ausführungsbeispiel identisch. Im Gegensatz dazu umfaßt es jedoch noch zusätzlich zu den Untergestellen 5, welche die Regalzellen 8 tragen, weitere Regalzellen 9, welche in zwischen den Untergestellen 5 liegenden Zwischenzonen 10 angeordnet sind, und zwar vorzugsweise so, daß sie mit einer Frontfläche 9a zur Außenseite des Drehturmspeichers weisen, und zumindest teilweise diejenigen Regalzellen 8 der Untergestelle 5 überdecken, deren Frontflächen 8a nicht ebenfalls zur Außenseite des Drehturmspeichers weisen. Nach der im Rahmen dieser Patentschrift verwendeten Definition weisen immer nur diejenigen Frontflächen 8a und 9a zur Außenseite des Drehturmspeichers hin, welche tangential zu einer um die Trägergestellachse 3a herumlaufenden Kreisbahn ausgerichtet sind.

Vorzugsweise sind die Regalzellen 8 und 9 entweder aus Metall oder aus Kunststoff hergestellt, wobei die Regalzellen 9 in gleicher Weise wie die Regalzellen 8 ebenfalls übereinander angeordnete Reihen von Kassettenfächern für senkrecht stehende Bandkassetten aufweisen.

Vorzugsweise erstrecken sich die Regalzellen 9 ebenfalls über die gesamte Höhe des Trägergestells 4.

Wie bereits vorstehend erwähnt, sind an den Untergestellen 5 die Regalzellen 8 so angeordnet, daß die Regalzellen 8 eines jeden Untergestells 5 einen zur Untergestelldrehachse koaxialen Zylinder mit einer im Querschnitt achteckigen Außenmantelfläche 7 bilden.

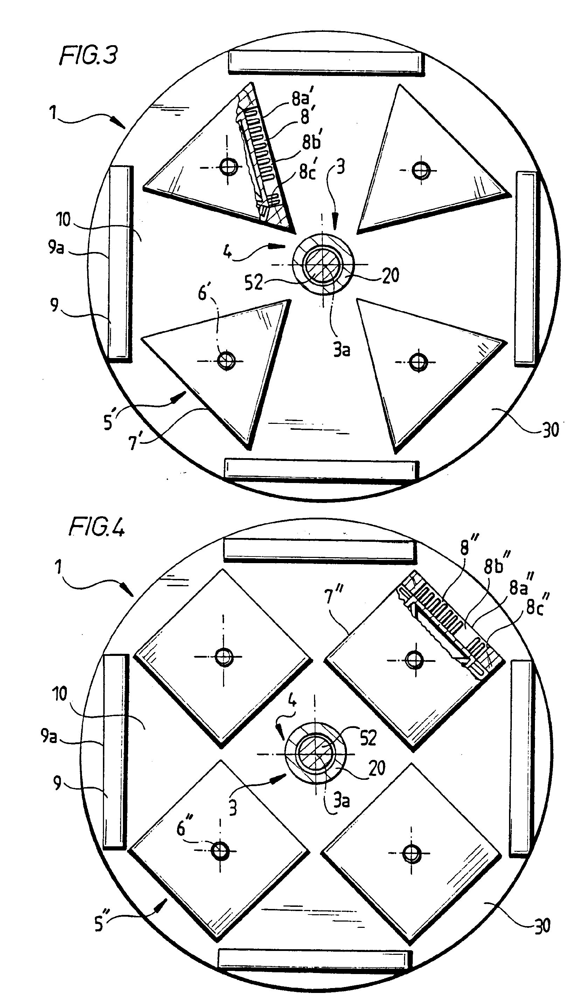

Im Gegensatz dazu sind in den in Fig. 3 und 4 dargestellten Ausführungsbeispielen die Regalzellen 8 derart an den Untergestellen 5′ und 5˝ angeordnet, daß diese zwar ebenfalls zur Untergestelldrehachse 6′ und 6˝ koaxiale Zylinder bilden, wobei diese Zylinder Außenmantelflächen 7′ und 7˝ aufweisen, welche im Querschnitt dreieckig oder rechteckig sind, vorzugsweise die Form eines gleichschenkligen Dreiecks bzw. eines Quadrats aufweisen.

Alternativ dazu können aber auch die Regalzellen 8 so ausgebildet sein, daß sie einen Zylinder mit einer im Querschnitt runden Außenmantelfläche bilden.

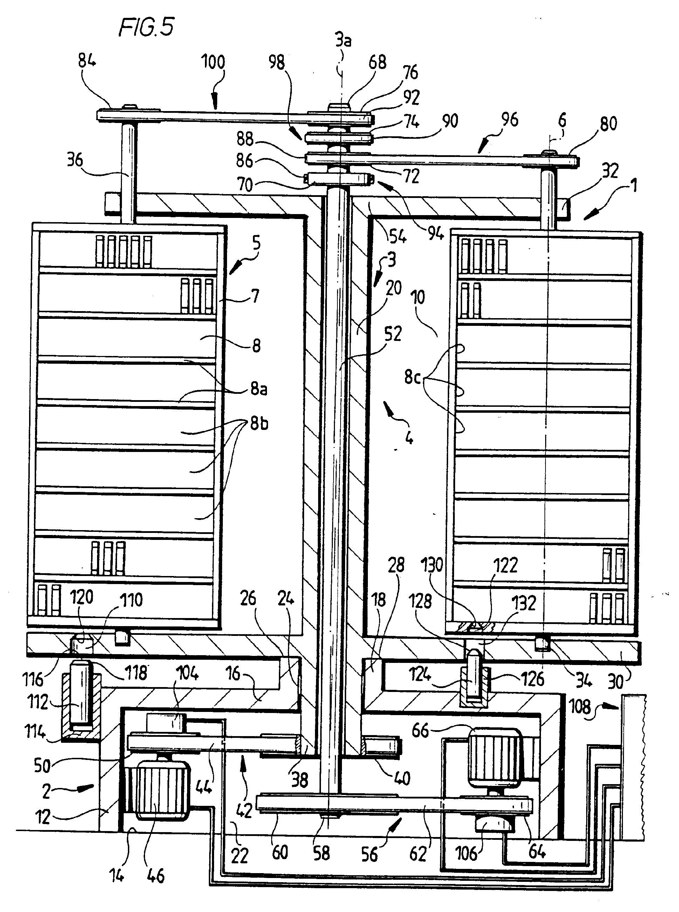

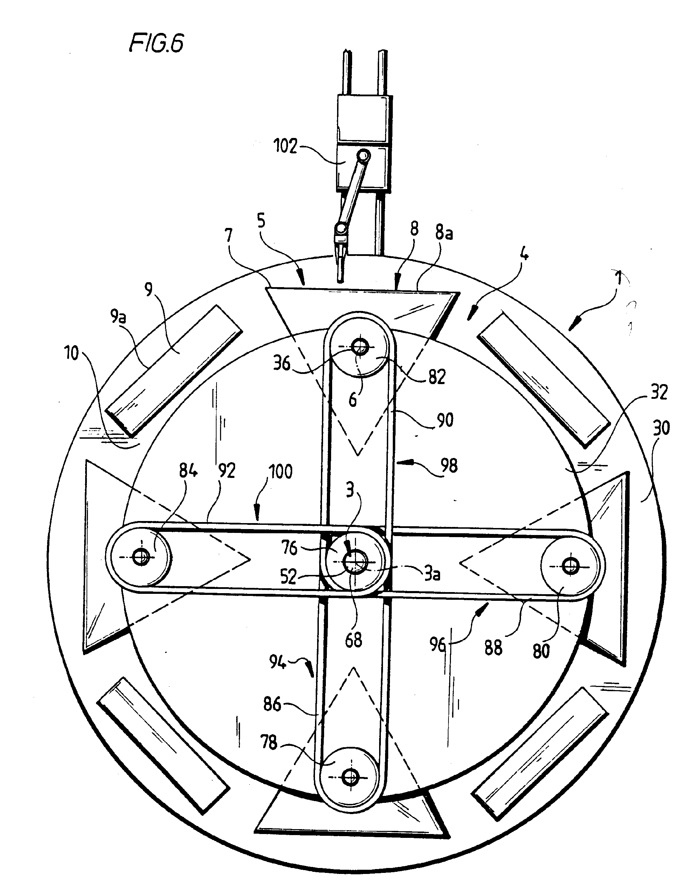

Eine bevorzugte Möglichkeit eines Antriebs eines derartigen erfindungsgemäßen Drehturmspeichers ist in den Fig. 5 und 6 dargestellt.

Wie in Fig. 5 zu ersehen ist, ist das Bodengestell 2 so ausgebildet, daß es Seitenwände 12 aufweist, die sich im wesentlichen senkrecht von einer Bodenfläche 14 erheben und auf dieser aufstehen, sowie einen Deckel 16, welcher im wesentlichen parallel zur Bodenfläche 14 verläuft. Dieser Deckel 16 ist zusammen mit den Seitenwänden 12 als selbsttragendes Gehäuse ausgebildet, auf welchem das als Ganzes mit 1 bezeichnete Drehgestell ruht. Zur Aufnahme des Drehgestells 1 umfaßt der Deckel 16 eine Führungsbüchse 18 für eine Welle 20, welche sich durch die Führungsbüche 18 hindurch und somit auch durch den Deckel 16 hindurch in ein Inneres 22 des Bodengestells 2 erstreckt. Die Führungsbüchse 18 bildet dabei ein Radiallager 24 für die Welle 20. Darüberhinaus bildet die Führungsbüchse 18 mit dem Drehgestell 1 zugewandten Stirnseiten 26 ein als Ganzes mit 28 bezeichnetes Axialdrucklager, auf welchem eine Bodenplatte 30 des Trägergestells 4 ruht. Die Bodenplatte 30 ist dabei drehfest an der ebenfalls vom Trägergestell 4 umfaßten Welle 20 gehalten und vorzugsweise einstückig an dieses angeformt.

Die Welle 20 erstreckt sich dabei von der Bodenplatte 30 koaxial zur Trägergestellachse 3a nach oben bis zu einer Deckelplatte 32 des Trägergestells 4, welche parallel zur Bodenplatte 30 ausgerichtet ist.

Zwischen der Bodenplatte 30 und der Deckelplatte 32 erstrecken sich dann die Untergestelle 5 mit ihren parallel zur Trägergestellachse 3a ausgerichteten Untergestelldrehachsen 6, die, wie in Fig. 6 zu ersehen, in gleichem radialem Abstand von der Trägergestellachse 3a angeordnet sind und in den Eckpunkten eines Quadrats liegen.

Die Lagerung der Untergestelle 5 erfolgt in der Bodenplatte 30 durch Zapfen 34, die sich von den Untergestellen 5 nach unten in die Bodenplatte 30 hineinerstrecken und in dieser sowohl durch ein Radiallager als auch durch ein Axialdrucklager gehalten sind sowie durch Untergestellantriebswellen 36, welche sich von dem jeweiligen Untergestell 5 nach oben durch die Deckelplatte 32 hindurch erstrecken und in dieser durch ein Radiallager gehalten sind.

Eine Drehung des Trägergestells 4 ist dadurch möglich, daß die Welle 20 an ihrem in das Innere 22 des Bodengestells 2 hineinragenden Ende 38 ein Antriebsrad 40 trägt, welches Teil eines als Ganzes mit 42 bezeichneten Riementriebs ist, welcher einen Riemen 44 und ein auf einer Motorwelle eines Trägergestellantriebsmotors 46 sitzendes Abtriebsrad 50 umfaßt. Durch Ansteuerung des Trägergestellantriebsmotors 46 kann nun eine definierte Verdrehung des Trägergestells 4 erreicht werden.

Bei dem in Fig. 5 dargestellten Ausführungsbeispiel ist die Welle 20 als Hohlwelle ausgebildet und von einer Zentralantriebswelle 52 durchsetzt, welche über das untere Ende 38 der Welle 20 als auch über ein oberes Ende 54 der Welle 20 übersteht.

Auch die Zentralantriebswelle 52 ist über einen als Ganzes mit 56 bezeichneten Riementrieb angetrieben, welcher ein auf einem unteren Ende 58 der Zentralantriebswelle sitzendes Antriebsrad 60, einen Riemen 62 und ein Abtriebsrad 64 umfaßt, wobei das Abtriebsrad 64 auf einer Motorwelle eines Untergestellantriebsmotors 66 sitzt. Mit ihrem über das Trägergestell 4, insbesondere dessen Deckelplatte 32 überstehenden Endabschnitt 68 trägt die Zentralantriebswelle 52 eine Vielzahl von übereinander angeordneten Abtriebsrädern 70, 72, 74 und 76, wobei jedes dieser Abtriebsräder 70 bis 76 mit einem der Antriebsräder 78, 80, 82 und 84 über einen Riemen 86, 88, 90 und 92 angetrieben ist.

Voraussetzung hierfür ist, daß die Untergestellantriebswellen 36 der einzelnen Untergestelle 5 so weit verlängert sind, daß die Antriebsräder 78 bis 84 jeweils in entsprechender Höhe der jeweiligen Abtriebsräder 70 bis 76 angeordnet sind, so daß der jeweilige Riemen 86 bis 92 im wesentlichen parallel zur Deckelplatte 32 verläuft.

Somit ist jedes Untergestell über einen eigenen Riementrieb 94 bis 100 angetrieben, wobei diese Riemengetriebe dadurch gekoppelt sind, daß alle Abtriebsräder 70 bis 76 auf der Zentralantriebswelle 52 drehfest sitzen.

Durch Drehen des Untergestellantriebsmotors 66 sind somit sämtliche Untergestelle 5 gleichzeitig relativ zum Trägergestell 4 drehbar.

Die Kassettenfächer 8c der Regalzellen 8 sind nun beispielsweise dadurch in eine Zugriffsposition für einen Roboter 102 bringbar, daß zum einen mittels des Trägergestellantriebs 46 das Trägergestell 4 gedreht wird und zum andern eine Drehung des jeweiligen Untergestells 5 mittels des Untergestellantriebsmotors 66 erfolgt, wobei stets alle Untergestelle 5 gleichzeitig gedreht werden.

Hierzu sind die Drehung des Trägergestells 4 mit einem Sensor 104 und die Drehung der Untergestelle durch einen Sensor 106 zu erfassen und einer Steuerung 108 zu melden, welche sowohl den Trägergestellantrieb 46 als auch den Untergestellantriebsmotor 66 steuert.

Die Steuerung 108 kann nun so aufgebaut sein, daß sie zuerst die Drehung des Trägergestells 4 steuert und nachfolgend die Drehung der Untergestelle 5. Besonders vorteilhaft ist es jedoch, wenn die Steuerung 108 gleichzeitig die Drehung des Trägergestells 4 mit der Drehung aller Untergestelle 5 steuert, um möglichst schnell die gewünschte Regalzelle 8 in einer Zugriffsposition für den Roboter 102 zu bringen.

Im Gegensatz dazu sind die Regalzellen 9 einfacher in ihre Zugriffsposition für den Roboter 102 zu bringen, da lediglich mit dem Trägergestellantriebsmotor 46 eine Drehung des Trägergestells 4 zu erfolgen hat, an welchem die Regalzellen 9 stationär angeordnet sind.

Besonders vorteilhaft ist im Rahmen der vorliegenden Erfindung, wenn mittels der Steuerung unter Zuhilfenahme der Sensoren 104 und 106 eine Grobpositionierung des Trägergestells 4 und gegebenenfalls der Untergestelle 5 erfolgt, wenn ein bestimmtes Kassettenfach 8c in eine Zugriffstellung für den Roboter 102 gebracht werden soll.

Eine Feinpositionierung in der Zugriffstellung erfolgt dann noch zusätzlich durch erste Positionierelemente, welche beispielsweise eine fest am Trägergestell 4 angeordnete Ausnehmung 110 sowie einen am Bodengestell 2 angeordneten Riegel 112 aufweist, der durch eine Verschiebeeinrichtung 114 in die Ausnehmung 110 ein- und aus dieser ausfahrbar ist. Vorzugsweise ist die Verschiebeeinrichtung 110 so ausgebildet, daß sie eine Verschiebung des Riegels parallel zur Längsachse der Zentralantriebswelle 52 erlaubt.

Vorzugsweise ist der Riegel an einem vorderen Ende 116 mit Einfahrschrägen 118 versehen und die Ausnehmung 110 auf ihrer dem Riegel 112 zugewandten Seite ebenfalls mit Einfahrschrägen 120, so daß eine Grobpositionierung des Trägergestells 4 durch die Steuerung 108 mittels der Sensoren 104 und 106 ausreichend ist und ein Übergang zur Feinpositionierung während des Einfahrens des Riegels 112 in die Ausnehmung 110 und Gegeneinandergleiten der Einfahrschrägen 120 erfolgt. In der voll in die Ausnehmung 110 eingefahrenen Stellung des Riegels 112 bilden die Ausnehmung und der Riegel eine Passung, die eine genaue Ausrichtung des Trägergestells 4 relativ zum Bodengestell 2 darstellt.

Vorzugsweise ist für jede Stellung des Trägergestells 4, in welcher eines der Kassettenfächer 8c in der Zugriffstellung für den Roboter 102 ist, eine aus Ausnehmung 110 vorgesehen, was beispielsweise bei dem dargestellten Ausführungsbeispiel in den Fig. 5 und 6 zu insgesamt 8 Ausnehmungen 110 in Winkelabständen von 45° führt, da jeweils 4 Untergestelle 5 und 4 weitere Regalzellen von dem Trägergestell 4 gehalten sind und diese jeweils relativ zueinander in gleichen Winkelabständen angeordnet sind.

Prinzipiell sind bei jedem erfindungsgemäßen Drehspeicher so viele Ausnehmungen 110 vorgesehen, wie Regalzellen 8, 9 vorhanden sind, deren Frontflächen 8a, 9a zur Außenseite des Drehturmspeichers weisen.

Auch bezüglich der Untergestelle 5 ist eine Grobpositionierung mittels der Steuerung 108 und dem Sensor 106 vorgesehen, während eine Genaupositionierung ebenfalls mittels einer Ausnehmung 122 an dem Untergestell 5 erfolgt und einem in diese Ausnehmung 122 einfahrbaren Riegel 124, der ebenfalls mittels einer Verschiebeeinrichtung 126 in die Ausnehmung 122 einfahrbar ist und vorzugsweise parallel zum Zentralrohr 52 bewegbar.

Vorteilhafterweise erfolgt die Genaupositionierung des Untergestells 5 nicht relativ zum Drehgestell 4, sondern aus Gründen der Genauigkeit ebenfalls relativ zum Bodengestell 2, d.h., daß der Riegel 124 mit der Verschiebeeinrichtung 126 am Bodengestell 2 gehalten ist.

In gleicher Weise wie der Riegel 112 ist der Riegel 124 mit Einfahrschrägen 128 versehen und die Ausnehmung 122 mit Einfahrschrägen 130, so daß ebenfalls beim Einfahren des Riegels 124 in die Ausnehmung 122 der Übergang von der Grobpositionierung zur Genaupositionierung erfolgt und im voll in die Ausnehmung 12 eingegeschobenen Zustand des Riegels 124 eine Passung zwischen diesen beiden besteht.

Um den Riegel 124 am Bodengestell 2 zu halten, ist es erforderlich, die Bodenplatte 30 des Trägergestells 4 mit einem Durchbruch 132 zu versehen, wobei in diesem Fall vorzugsweise die Verschiebeeinrichtung 126 auf dem Deckel 16 des Bodengestells 2 gehalten ist und die Ausnehmung 122 bodenseitig des Untergestells 5 angeordnet ist.

In gleicher Weise ist vorzugsweise die Ausnehmung 110 in der Bodenplatte 30 des Trägergestells 4 vorgesehen und der Riegel 112 mit der Verschiebeeinrichtung 14 an einer Seitenwand 12 oder beispielsweise auch am Deckel des Bodengestells 2 gehalten.

Besonders vorteilhaft ist bei der erfindungsgemäßen Vorrichtung, wenn die Ansteuerung der Verschiebeeinrichtungen 114 und 126 ebenfalls über die Steuerung 108 erfolgt, insbesondere mit einem Zyklus in dem zunächst die Steuerung 108 die Grobpositionierung des Trägergestells 4 und gegebenenfalls des Untergestells 5 vornimmt und nach Abschluß der Grobpositionierung sowohl die Verschiebeeinrichtung 126 zur Genaupositionierung des Trägergestells 4 und des Untergestells 5 steuert.

Die Zahl der Ausnehmungen 122, die bodenseitig des Untergestells 5 angeordnet sind, richtet sich danach, wieviele Regalzellen 8 dieses Untergestell aufweist. Im Fall von 3 Regalzellen, wie in Fig. 6, sind 3, im Winkelabstand von 120° voneinander angeordnete Ausnehmungen 122 vorhanden, bei einer höheren Zahl von Regalzellen entsprechend mehr.

## Patentansprüche

1. Drehspeicher für Bandkassetten mit einem Bodengestell (2) und einem auf diesem und um eine Drehachse drehbaren Drehgestell (1), welches Regalzellen mit Kassettenfächern für Bandkassetten trägt, wobei das Drehgestell ein Trägergestell (4) aufweist, welches um die Drehachse (3a) relativ zum Bodengestell (2) drehbar ist und an welchem um seitlich der Drehachse (3a) angeordnete Untergestelldrehachsen (6) drehbare Untergestelle (5) gelagert sind, welche mehrere am Außenumfang angeordnete Regalzellen (8) tragen,
**dadurch gekennzeichnet**,
daß nahe am Außenumfang des Trägergestells (4) in den sich zwischen den Untergestellen (5) bildenden Zwischenzonen (10) weitere Regalzellen (9) stationär angeordnet sind.

2. Drehspeicher nach Anspruch 1, dadurch gekennzeichnet, daß die Drehachse (3a) vom Bodengestell (2) senkrecht nach oben verläuft.

3. Drehspeicher nach Anspruch 1 oder 2, dadurch gekennzeichnet, daß die Drehachse (3a) und die Untergestelldrehachsen (6) parallel zueinander verlaufen.

4. Drehspeicher nach einem der voranstehenden Ansprüche, dadurch gekennzeichnet, daß die Untergestelldrehachsen (6) im wesentlichen senkrecht angeordnet sind.

5. Drehspeicher nach einem der voranstehenden Ansprüche, dadurch gekennzeichnet, daß die Untergestelldrehachsen (6) im gleichen Abstand von der Drehachse (3a) des Trägergestells (4) angeordnet sind.

6. Drehspeicher nach einem der voranstehenden Ansprüche, dadurch gekennzeichnet, daß die Untergestelldrehachsen (6) im gleichen Winkelabstand um die Drehachse (3a) des Trägergestells (4) angeordnet sind.

7. Drehspeicher nach Anspruch 6, dadurch gekennzeichnet, daß die Untergestelle eine zylindrische, runde Außenumfangsfläche aufweisen.

8. Drehspeicher nach Anspruch 6, dadurch gekennzeichnet, daß die Untergestelle (5′) eine dreikantige Außenumfangsfläche (7′) aufweisen.

9. Drehspeicher nach 6, dadurch gekennzeichnet, daß die Untergestelle (5˝) eine vierkantige Außenumfangsfläche (7˝) aufweisen.

10. Drehspeicher nach Anspruch 6, dadurch gekennzeichnet, daß die Untergestelle (5) eine vielkantige Außenumfangsfläche (7) aufweisen.

11. Drehspeicher nach einem der voranstehenden Ansprüche, dadurch gekennzeichnet, daß die zu einer Außenseite des Drehspeichers hin gewandten Frontseiten (8a, 9a) der Regalzellen (8, 9) einen im wesentlichen konstanten Abstand von der Drehachse (3a) des Trägergestells (4) aufweisen.

12. Drehspeicher nach einem der voranstehenden Ansprüche, dadurch gekennzeichnet, daß ein Trägergestellantrieb vorgesehen ist.

13. Drehspeicher nach Anspruch 12, dadurch gekennzeichnet, daß der Trägergestellantrieb einen Trägergestellantriebsmotor (46) umfaßt, welcher relativ zum Bodengestell (2) nichtdrehend angeordnet ist.

14. Drehspeicher nach einem der voranstehenden Ansprüche, dadurch gekennzeichnet, daß ein Untergestellantrieb vorgesehen ist.

15. Drehspeicher nach Anspruch 14, dadurch gekennzeichnet, daß mehrere Untergestelle (5) durch einen gemeinsamen Untergestellantrieb antreibbar sind.

16. Drehspeicher nach Anspruch 15, dadurch gekennzeichnet, daß alle Untergestelle (5) durch einen gemein- samen Untergestellantrieb antreibbar sind.

17. Drehspeicher nach einem der Ansprüche 14 bis 16, dadurch gekennzeichnet, daß der Untergestellantrieb einen Untergestellantriebsmotor (66) umfaßt, der relativ zum Bodengestell (2) nichtdrehend angeordnet ist.

18. Drehspeicher nach Anspruch 17, dadurch gekennzeichnet, daß der Untergestellantriebsmotor (66) am Bodengestell (2) angeordnet ist.

19. Drehspeicher nach einem der Ansprüche 14 bis 18, dadurch gekennzeichnet, daß der Untergestellantrieb eine zur Drehachse (3a) des Trägergestells koaxial angeordnete Zentralwelle (52) aufweist.

20. Drehspeicher nach Anspruch, dadurch gekennzeichnet, daß der Untergestellantriebsmotor (66) die Zentralwelle (52) über einen Riementrieb (56) antreibt.

21. Drehspeicher nach einem der Ansprüche 19 oder 20, dadurch gekennzeichnet, daß von der Zentralwelle (52) ausgehend die Untergestelle (5) angetrieben sind.

22. Drehspeicher nach Anspruch 21, dadurch gekennzeichnet, daß jedes Untergestell (5) eine zur Untergestellachse (6) koaxiale Untergestellantriebswelle (36) aufweist, welche von der Zentralwelle (52) angetrieben ist.

23. Drehspeicher nach Anspruch 22, dadurch gekennzeichnet, daß die Zentralwelle (52) jede Untergestellantriebswelle (36) über einen Riementrieb (94 - 100) antreibt.

24. Drehspeicher nach Anspruch 23, dadurch gekennzeichnet, daß jeder Riementrieb in einer zur Drehachse (3a) des Trägergestells (4) senkrechten Ebene angeordnet ist.

25. Drehspeicher nach einem der Ansprüche 23 oder 24, dadurch gekennzeichnet, daß die Riementriebe (94 - 100) zwischen der Zentralwelle (52) und der Untergestellantriebswelle (36) auf der dem Bodengestell (2) gegenüberliegenden Seite des Trägergestells (4) angeordnet sind.

26. Drehspeicher nach einem der voranstehenden Ansprüche, dadurch gekennzeichnet, daß das Trägergestell (4) eine Hohlwelle (20) aufweist, welche von der Zentralwelle (52) durchsetzt ist.

27. Drehspeicher nach Anspruch 23, dadurch gekennzeichnet, daß die Hohlwelle (20) drehbar am Bodengestell (2) gelagert ist.

28. Drehspeicher nach einem der voranstehenden Ansprüche, dadurch gekennzeichnet, daß das Bodengestell (2) ein selbsttragendes Gehäuse (12, 16) umfaßt.

29. Drehspeicher nach Anspruch 27, dadurch gekennzeichnet, daß die Hohlwelle (20) über einen vom Trägergestellantrieb umfassten Riementrieb (42) getrieben ist.

30. Drehspeicher nach einem der voranstehenden Ansprüche, dadurch gekennzeichnet, daß der Riementrieb (42) zum Antrieb der Hohlwelle und der Riementrieb (56) zum Antrieb der Zentralwelle (52) im Bodengestell (2) angeordnet sind.

31. Drehspeicher nach einem der voranstehenden Ansprüche, dadurch gekennzeichnet, daß eine Steuerung (108) vorgesehen ist, welche die Drehstellungen des Trägergestells (4) und der Untergestelle (5) erfaßt.

32. Drehspeicher nach Anspruch 31, dadurch gekennzeichnet, daß die Steuerung (108) aus den Drehstellungen des Trägergestellantriebs und des Untergestellantriebs die Position der einzelnen, von den Untergestellen (5) getragenen Regalzellen (8) relativ zu einem außenliegenden stationären Fixpunkt ermittelt.

33. Drehspeicher nach Anspruch 31 oder 32, dadurch gekennzeichnet, daß die Steuerung (108) aufgrund der Drehstellungen des Trägergestells (4) und der Untergestelle (5) eine Drehung des Trägergestells (4) und gegebenenfalls des Untergestells (5) steuert, um ein ausgewähltes Kassettenfach (8c) in einer Zugriffstellung für einen Roboter (102) zu positionieren.

34. Drehspeicher nach 33, dadurch gekennzeichnet, daß die Steuerung (108) zur Positionierung eines Kassettenfachs (8c) von einem der Untergestelle (5) dieses Untergestell (5) bereits während der Drehung des Trägergestells (4) dreht.

35. Drehspeicher nach einem der Ansprüche 31 bis 34, dadurch gekennzeichnet, daß mit der Steuerung (108) eine Grobpositionierung des Trägergestells (4) und der Untergestelle (5) erfolgt.

36. Drehspeicher nach einem der voranstehenden Ansprüche, dadurch gekennzeichnet, daß eine Genaupositionierung vorgesehen ist, mit welcher eine exakte Positionierung des Trägergestells (4) in vorgegebenen Winkelstellungen relativ zum Bodengestell (2) erfolgt und welche am Trägergestell (4) und am Bodengestell (2) angeordnete erste Positionierelemente (110, 112) aufweist.

37. Drehspeicher nach einem der voranstehenden Ansprüche, dadurch gekennzeichnet, daß eine Genaupositionierung vorgesehen ist, mit welcher eine exakte Positionierung eines Untergestells (5) in vorgegebenen Winkel- stellungen relativ zum Bodengestell (2) erfolgt und welche am Untergestell (5) und am Bodengestell (2) angeordnete zweite Positionierelemente (122, 124) aufweist.

38. Drehspeicher nach Anspruch 36 oder 37, dadurch gekennzeichnet, daß die Genaupositioniereinrichtung mechanisch arbeitet.

39. Drehspeicher nach Anspruch 38, dadurch gekennzeichnet, daß die Positionierelemente (110, 112; 122, 124) einen in eine Ausnehmung (110, 122) eingreifenden Riegel (112, 124) aufweisen.

40. Drehspeicher nach Anspruch 39, dadurch gekennzeichnet, daß der Riegel (112, 124) oder die Ausnehmung (110, 122) mit Einfahrschrägen (118, 120; 128, 130) versehen sind.

41. Drehspeicher nach Anspruch 39 oder 40, dadurch gekennzeichnet, daß der Riegel (112, 124) mit der Ausnehmung (110, 122) eine Passung bildet.

## Claims

1. Revolving storage facility for tape cassettes comprising a base (2) and a rotary frame (1) rotatable on said base and about an axis of rotation, said rotary frame carrying shelf units with cassette compartments for tape cassettes and having a supporting frame (4) rotatable about the axis of rotation (3a) relative to the base (2), subframes (5) rotatable about subframe axes of rotation (6) arranged laterally of the axis of rotation (3a) being mounted on said supporting frame and carrying a plurality of shelf units (8) arranged at the outer periphery, characterized in that additional shelf units (9) are stationarily arranged near to the outer periphery of the supporting frame (4) in the intermediate zones (10) formed between the subframes (5).

2. Revolving storage facility as defined in claim 1, characterized in that the axis of rotation (3a) extends vertically upwards from the base (2).

3. Revolving storage facility as defined in claim 1 or 2, characterized in that the axis of rotation (3a) and the subframe axes of rotation (6) extend parallel to one another.

4. Revolving storage facility as defined in any of the preceding claims, characterized in that the subframe axes of rotation (6) are arranged essentially vertically.

5. Revolving storage facility as defined in any of the preceding claims, characterized in that the subframe axes of rotation (6) are arranged at the same distance from the axis of rotation (3a) of the supporting frame (4).

6. Revolving storage facility as defined in any of the preceding claims, characterized in that the subframe axes of rotation (6) are arranged at the same angular spacing around the axis of rotation (3a) of the supporting frame (4).

7. Revolving storage facility as defined in claim 6, characterized in that the subframes have a cylindrical, round outer circumferential surface.

8. Revolving storage facility as defined in claim 6, characterized in that the subframes (5′) have a three-sided outer circumferential surface (7′).

9. Revolving storage facility as defined in claim 6, characterized in that the subframes (5˝) have a four-sided outer circumferential surface (7˝).

10. Revolving storage facility as defined in claim 6, characterized in that the subframes (5) have a many-sided outer circumferential surface (7).

11. Revolving storage facility as defined in any of the preceding claims, characterized in that the front sides (8a, 9a) of the shelf units (8, 9) facing towards an outer side of the revolving storage facility are spaced at an essentially constant distance from the axis of rotation (3a) of the supporting frame (4).

12. Revolving storage facility as defined in any of the preceding claims, characterized in that a supporting frame drive is provided.

13. Revolving storage facility as defined in claim 12, characterized in that the supporting frame drive comprises a supporting frame drive motor (46) arranged non-rotatingly in relation to the base (2).

14. Revolving storage facility as defined in any of the preceding claims, characterized in that a subframe drive is provided.

15. Revolving storage facility as defined in claim 14, characterized in that several subframes (5) are drivable by a common subframe drive.

16. Revolving storage facility as defined in claim 15, characterized in that all the subframes (5) are drivable by a common subframe drive.

17. Revolving storage facility as defined in any of claims 14 to 16, characterized in that the subframe drive comprises a subframe drive motor (66) arranged non-rotatingly in relation to the base (2).

18. Revolving storage facility as defined in claim 17, characterized in that the subframe drive motor (66) is arranged on the base (2).

19. Revolving storage facility as defined in any of claims 14 to 18, characterized in that the subframe drive has a central shaft (52) arranged coaxially to the axis of rotation (3a) of the supporting frame.

20. Revolving storage facility as defined in claim 19, characterized in that the subframe drive motor (66) drives the central shaft (52) via a belt drive (56).

21. Revolving storage facility as defined in either of claims 19 or 20, characterized in that the subframes (5) are driven from the central shaft (52).

22. Revolving storage facility as defined in claim 21, characterized in that each subframe (5) has a subframe drive shaft (36) coaxial to the subframe axis (6) and driven from the central shaft (52).

23. Revolving storage facility as defined in claim 22, characterized in that the central shaft (52) drives each subframe drive shaft (36) via a belt drive (94 - 100).

24. Revolving storage facility as defined in claim 23, characterized in that each belt drive is arranged in a plane perpendicular to the axis of rotation (3a) of the supporting frame (4).

25. Revolving storage facility as defined in either of claims 23 or 24, characterized in that the belt drives (94 - 100) are arranged between the central shaft (52) and the subframe drive shaft (36) on the side of the supporting frame (4) located opposite the base (2).

26. Revolving storage facility as defined in any of the preceding claims, characterized in that the supporting frame (4) has a hollow shaft (20) penetrated by the central shaft (52).

27. Revolving storage facility as defined in claim 23, characterized in that the hollow shaft (20) is rotatably mounted on the base (2).

28. Revolving storage facility as defined in any of the preceding claims, characterized in that the base (2) comprises a self-supporting housing (12, 16).

29. Revolving storage facility as defined in claim 27, characterized in that the hollow shaft (20) is driven via a drive belt (42) included in the supporting frame drive.

30. Revolving storage facility as defined in any of the preceding claims, characterized in that the belt drive (42) for driving the hollow shaft and the belt drive (56) for driving the central shaft (52) are arranged in the base (2).

31. Revolving storage facility as defined in any of the preceding claims, characterized in that a control (108) is provided for detecting the rotary positions of the supporting frame (4) and the subframes (5).

32. Revolving storage facility as defined in claim 31, characterized in that the control (108) determines from the rotary positions of the supporting frame drive and the subframe drive the position of the individual shelf units (8) carried by the subframes (5) relative to an outside, stationary fixed point.

33. Revolving storage facility as defined in claim 31 or 32, characterized in that the control (108) controls rotation of the supporting frame (4) and possibly the subframe (5) on the basis of the rotary positions of the supporting frame (4) and the subframes (5) in order to position a selected cassette compartment (8c) in an access position for a robot (102).

34. Revolving storage facility as defined in claim 33, characterized in that for positioning a cassette compartment (8c) of one of the subframes (5) the control (108) already rotates this subframe (5) during the rotation of the supporting frame (4).

35. Revolving storage facility as defined in any of claims 31 to 34, characterized in that a rough positioning of the supporting frame (4) and the subframes (5) is carried out with the control (108).

36. Revolving storage facility as defined in any of the preceding claims, characterized in that an exact positioning means is provided for precisely positioning the supporting frame (4) in predetermined angular positions relative to the base (2), said means having first positioning elements (110, 112) arranged on the supporting frame (4) and the base (2).

37. Revolving storage facility as defined in any of the preceding claims, characterized in that an exact positioning means is provided for precisely positioning a subframe (5) in predetermined angular positions relative to the base (2), said means having second positioning elements (122, 124) arranged on the subframe (5) and the base (2).

38. Revolving storage facility as defined in claim 36 or 37, characterized in that the exact positioning means operates mechanically.

39. Revolving storage facility as defined in claim 38, characterized in that the positioning elements (110, 112; 122, 124) have a locking bar (112, 124) engaging in a recess (110, 122).

40. Revolving storage facility as defined in claim 39, characterized in that the locking bar (112, 124) or the recess (110, 122) are provided with run-in bevels (118, 120; 128, 130).

41. Revolving storage facility as defined in claim 39 or 40, characterized in that the locking bar (112, 124) and the recess (110, 122) fit together.

## Revendications

1. Stockeur rotatif de cassette de bande comportant une structure de fond (2) et une structure rotative (1) tournant sur celui-ci autour d'un axe de rotation, lequel porte des cellules d'étagères avec des compartiments à cassette, la structure rotative comportant une structure de support (4) qui peut tourner autour de l'axe de rotation (3a), par rapport à la structure de fond (2) et sur laquelle sont montées des sous-structures (5) tournant autour d'axes de rotation (6), situés sur les côtés de l'axe de rotation (3a), lesquelles sous-structures portent plusieurs cellules d'étagère (8) disposées sur le pourtour extérieur, caractérisé en ce qu'à proximité du pourtour extérieur de la structure de support (4) d'autres cellules d'étagères (9) sont placées fixes dans les zones intermédiaires (10), formées entre les sous-structures (5).

2. Stockeur rotatif selon la revendication 1, caractérisé en ce que l'axe de rotation (3a) s'étend verticalement vers le haut à partir de la structure de fond (2).

3. Stockeur rotatif selon les revendications 1 ou 2, caractérisé en ce que l'axe de rotation (3a) et les axes de rotation (6) des sous-structures sont parallèles entre eux.

4. Stockeur rotatif selon l'une des revendications précédentes, caractérisé en ce que les axes de rotation (6) des sous-structures sont sensiblement verticaux.

5. Stockeur rotatif selon l'une des revendications précédentes, caractérisé en ce que les axes de rotation (6) des sous-structures se trouvent à une même distance de l'axe de rotation (3a) de la structure de support (4).

6. Stockeur rotatif selon l'une des revendications précédentes, caractérisé en ce que les axes de rotation (6) des sous-structures se trouvent à une même distance angulaire autour de l'axe de rotation (3a) de la structure de support (4).

7. Stockeur rotatif selon la revendication 6, caractérisé en ce que les sous-structures présentent une surface périphérique extérieure cylindrique, ronde.

8. Stockeur rotatif selon la revendication 6, caractérisé en ce que les sous-structures (5′) présentent une surface périphérique extérieure (7′) triangulaire.

9. Stockeur rotatif selon la revendication 6, caractérisé en ce que les sous-structures (5˝) présentent une surface périphérique extérieure (7˝) quadrangulaire.

10. Stockeur rotatif selon la revendication 6, caractérisé en ce que les sous-structures (5) présentent une surface périphérique extérieure (7) polygonale.

11. Stockeur rotatif selon l'une des revendications précédentes, caractérisé en ce que les côtés frontaux (8a, 9a), tournés vers un côté extérieur du stockeur rotatif, des cellules d'étagères (8, 9), sont à une distance sensiblement constante de l'axe de rotation (3a) de la structure de support (4).

12. Stockeur rotatif selon l'une des revendications précédentes, caractérisé en ce qu'il est prévu un mécanisme d'entraînement de la structure de support.

13. Stockeur rotatif selon la revendication 12, caractérisé en ce que le mécanisme d'entraînement de la structure de support comporte un moteur (46) qui ne peut tourner par rapport à la structure de fond (2).

14. Stockeur rotatif selon l'une des revendications précédentes, caractérisé en ce qu'il est prévu un mécanisme d'entraînement de sous-structure.

15. Stockeur rotatif selon la revendication 14, caractérisé en ce que plusieurs sous-structures (5) peuvent être entraînées par un mécanisme d'entraînement commun.

16. Stockeur rotatif selon la revendication 15, caractérisé en ce que toutes les sous-structures (5) peuvent être entraînées par un mécanisme d'entraînement commun.

17. Stockeur rotatif selon l'une des revendications 14 à 16, caractérisé en ce que le mécanisme d'entraînement des sous-structures comporte un moteur (66) qui ne peut tourner par rapport à la structure de fond (2).

18. Stockeur rotatif selon la revendication 17, caractérisé en ce que le moteur d'entraînement des sous-structures (66) est placé sur la structure de fond (2).

19. Stockeur rotatif selon l'une des revendications 14 à 18, caractérisé en ce que le mécanisme d'entraînement des sous-structures comporte un arbre central (52) coaxial à l'axe de rotation (3a) de la structure de support.

20. Stockeur rotatif selon la revendication 19, caractérisé en ce que le moteur d'entraînement des sous-structures (66) entraîne l'arbre central (52), par une transmission à courroie (56).

21. Stockeur rotatif selon l'une des revendications 19 ou 20, caractérisé en ce que les sous-structures (5) sont entraînées à partir de l'arbre central (52).

22. Stockeur rotatif selon la revendication 21, caractérisé en ce que chaque sous-structure (5) comporte un arbre (36) d'entraînement des sous-structures, coaxial à l'axe (6) des sous-structures, lequel est entraîné par l'arbre central (52).

23. Stockeur rotatif selon la revendication 22, caractérisé en ce que l'arbre central (52) entraîne chaque arbre d'entraînement de sous-structure (36) par une transmission à courroie (94 à 100).

24. Stockeur rotatif selon la revendication 23, caractérisé en ce que chaque mécanisme à courroie est placé dans un plan perpendiculaire à l'axe de rotation (3a) de la structure de support (4).

25. Stockeur rotatif selon l'une des revendications 23 ou 24, caractérisé en ce que les mécanismes à courroie (94 à 100) sont placés entre l'arbre central (52) et l'arbre d'entraînement de sous-structures (36), sur le côté opposé à la structure de fond (2), de la structure de support (4).

26. Stockeur rotatif selon l'une des revendications précédentes, caractérisé en ce que la structure de support (4) comporte un arbre creux (20) qui est traversé par l'arbre central (52).

27. Stockeur rotatif selon la revendication 23, caractérisé en ce que l'arbre creux (20) est monté tournant sur la structure de fond (2).

28. Stockeur rotatif selon l'une des revendications précédentes, caractérisé en ce que la structure de fond (2) comporte un boîtier (12, 16) autoportant.

29. Stockeur rotatif selon la revendication 27, caractérisé en ce que l'arbre creux (20) est entraîné par une transmission à courroie (42) faisant partie du mécanisme d'entraînement de la structure de support.

30. Stockeur rotatif selon l'une des revendications précédentes, caractérisé en ce que la transmission à courroie (42) pour l'entraînement de l'arbre creux et la transmission à courroie (56) pour l'entraînement de l'arbre central (52) sont placées dans la structure de fond (2).

31. Stockeur rotatif selon l'une des revendications précédentes, caractérisé en ce qu'il est prévu une commande (108) qui enregistre les positions de rotation de la structure de support (4) et des sous-structures (5).

32. Stockeur rotatif selon la revendication 31, caractérisé en ce que la commande (108) détermine la position des différentes cellules d'étagères (8), portées par les sous-structures (5), par rapport à un point fixe extérieur, à partir des positions de rotation du mécanisme d'entraînement de la structure de support et du mécanisme d'entraînement des sous-structures.

33. Stockeur rotatif selon les revendications 31 ou 32, caractérisé en ce que la commande (108) commande une rotation de la structure de support (4) et éventuellement de la sous-structure (5), à partir des positions de rotation de la structure de support (4) et des sous-structures (5), afin de positionner un compartiment à cassette (8c) sélectionné dans une position d'accès pour un robot (102).

34. Stockeur rotatif selon la revendication 33, caractérisé en ce que la commande (108) de positionnement d'un compartiment à cassette (8c) de l'une des sous-structures (5) fait tourner cette sous-structure (5) dès que la structure de support (4) est en rotation.

35. Stockeur rotatif selon l'une des revendications 35 à 34, caractérisé en ce que la commande (108) assure un positionnement grossier de la structure de support (4) et des sous-structures(5).

36. Stockeur rotatif selon l'une des revendications précédentes, caractérisé en ce qu'il est prévu un positionnement précis par lequel s'effectue un positionnement exact de la structure de support (4) dans des positions angulaires données par rapport à la structure de fond (2) et qui comporte des premiers éléments de positionnement (110, 112), situés sur la structure de support (4) et sur la structure de fond (2).

37. Stockeur rotatif selon l'une des revendications précédentes, caractérisé en ce qu'il est prévu un positionnement précis par lequel s'effectue un positionnement exact d'une sous-structure (5) dans des positions angulaires données par rapport à la structure de fond (2) et qui comporte des seconds éléments de positionnement (122, 124), situés sur la sous-structure (5) et sur la structure de fond (2).

38. Stockeur rotatif selon les revendications 36 ou 37, caractérisé en ce que le dispositif de positionnement précis fonctionne mécaniquement.

39. Stockeur rotatif selon la revendication 38, caractérisé en ce que les éléments de positionnement (110, 112 ; 122, 124) comportent un verrou (112, 124) s'engageant dans un évidement (110, 122).

40. Stockeur rotatif selon la revendication 39, caractérisé en ce que le verrou (112, 124) ou l'évidement (110, 122) est pourvu de surfaces obliques d'introduction (118, 120 ; 128, 130).

41. Stockeur rotatif selon les revendications 39 ou 40, caractérisé en ce que le verrou (112, 124) forme un ajustement avec l'évidement (110, 122).
